# EUROPEAN PATENT APPLICATION

(11) **EP 2 098 323 A2**
(43) Date of publication of application: **09.09.2009**
(21) Application number: 08166730.5
(22) Date of filing: 16.10.2008
(51) Int. Cl.: B23K 5/22

(54) **Lighter for gas torches and device for mechanical machining operations comprising such a lighter**

(30) Priority: 07.03.2008 IT MI20080383
(71) Applicant: Beratta, Marco, 22044 Inverigo (CO) (IT)
(72) Inventor: Beratta, Marco, 22044 Inverigo (CO) (IT)
(74) Representative: Tansini, Elio Fabrizio

(57) **Abstract**

A lighter (3) for mechanical machining operations, in particular for welding or thermal cutting of metals, comprising a base (4) and a support element (5) rotatably connected to the base (4) The support element comprises an insulating body (14) of ceramic material a first electrode (17) fully enclosed within the overall dimensions of the insulating body (14), and a converging surface (9) adapted to receive an inflammable gas flow from the nozzle (2) and to convey the gas flow towards the first electrode (17) The converging surface (9) defines said receiving portion (8) and is made of an electrically conductive material in order to define a second electrode (18) cooperating with the first electrode (17) for generating an electric arc capable of lighting the inflammable mixture. The electrodes (17,18) receive an electric potential difference from a piezoelectric element (29) activated by rotation of the support element (5) relative to the base (4) , following the thrust exerted by the nozzle (2) on the converging surface (9).

## Description

The present invention relates to a lighter for gas torches. In addition, the present invention pertains to a device for mechanical machining operations comprising such a lighter and the gas torch.

In particular, the invention falls within the field of the lighting devices for gas mixtures by spark striking, of the type used in workshops, industries or laboratories. In more detail, the present invention preferably applies in the field of lighting gas torches for welding or thermal cutting of metals.

It is known that welding and/or thermal cutting torches presently existing on the market comprise a manual instrument having a nozzle for delivery of an inflammable gas mixture coming from a suitable gas tank. Lighting of the inflammable mixture takes place by moving the nozzle close to a pilot flame that is generally provided on a suitable auxiliary apparatus. The pilot flame is fed by a fraction of the gas flow delivered from the tank or from an auxiliary tank and lit by a common lighter, for example.

In workshops, commonly the operators responsible for welding operations, once the pilot flame has been used for lighting one or more torches, leave said pilot flame on, for convenience when it has to be reused. This constitute a factor of risk for the operators' safety because the pilot flame is in any case a free flame that can cause fires or injuries to the operators themselves if they move too close to said flame or if the flame is handled in an awkward manner. In addition, should the flame accidentally turn off, the respective gas delivery could go on unchanged without the operators knowing it and the gas escape in the surrounding atmosphere could reach an explosiveness degree.

In addition, gas consumption for feeding of the pilot flames can reach high values, above all under situations in which the pilot flames are maintained always turned on, and this adversely affects both the plant management costs, and the polluting emissions of said plants.

It is finally to be considered that the rules presently in force as regards safety on the workplace impose strict limitations to the number of free flames present in the work environment, as they could generate negative effects on the maximum plant productivity.

It is also known, from Patent DE19521095 a lighter for gas torches having a base and a portion rotatably movable relative to the base and in which lighting of the gas delivered from the torch takes place through exploitation of a spark generated by a piezoceramic element. The piezoceramic element acts between the movable support of the lighter and the base for generating a spark following rotation of the movable support relative to the base. In more detail, the operator pushes the torch nozzle against the movable support, and this thrust on the movable support generates a compression of the piezoceramic element that will produce an electric arc capable of igniting the gas delivered by the torch nozzle.

Disadvantageously, the last-mentioned type of lighter has some important drawbacks.

In fact, a very high compression effort on the piezoceramic element is required for spark generation and this forces the operator to exert a high thrust action on the movable support. This, when repeated torch lighting operations are required, can tire the operator that would be then impaired in exerting his normal work. In particular, from the drawings of Patent DE19521095 it is possible to see that the movable support has a conformation capable of exerting a force on the piezoelectric element the value of which can be compared with the force exerted by the operator on the movable support, without any efficient multiplying action. As a result of that, application of an insufficient thrust would also generate a spark inappropriate to gas ignition and under this circumstance repeated operations by the lighter would be necessary in order to succeed in carrying out gas ignition.

In addition, direct contact between the torch nozzle and the movable support can produce great wear of the nozzle or also plastic deformation of said nozzle, and this would heavily impair correct passage of the gas through the nozzle. As a result, frequent replacements of the nozzle would be necessary, resulting in negative repercussions as regards production and costs.

Also to be considered is the fact that both electrodes of the German Patent DE19521095 are exposed to highly wearing operating conditions due to direct exposure to the flame generated by gas lighting and under these conditions the useful life of said electrodes is very limited. On the other hand, too much wear of the electrodes would cause further decay in reliability as regards gas lighting.

Also important is the fact that the German document mentioned above illustrates a configuration of electrodes that are fixed with the base and vice versa a variable orientation of the converging portion and therefore of the torch that is about to be lit, so that, while spark generation always takes place in the same position, the flow direction of the inflammable gas varies during the thrust action as it is directed between the electrodes exclusively in the final thrust position on the converging body.

In other words, at the beginning of the thrust step the gas passage is only tangential to the spark generation region and therefore lighting is less reliable.

The above in combination with the high effort required for causing spark generation, involves weak functional capacity of the device described in the prior art documents.

Secondarily, it should be also noted that adoption of a converging element with a continuous surface can give rise to detonation or knocking problems, under some situations.

In fact, in the presence of high gas flows coming out of the torch, the hole present on the converging element is not sufficient to allow passage of the whole flow and therefore it may happen that the gas that does not succeed in passing through said hole remains within the converging element giving rise to potentially explosive mixtures and therefore to said detonation problems.

Finally, it is also to be pointed out that wear of the electrodes adopted in the known art, in addition to being caused by direct exposure to the flame, is further increased by the wearing effects of the arcs being generated.

In fact, the presence of substantially punctiform electrodes wherein the spark always jumps from the same region of the first electrode and falls in the same area of the second electrode, involves successive wear of these portions leading to decay in performance.

Accordingly, it is a technical task of the present invention to make available a lighter for gas torches that is devoid of the above drawbacks.

Within the scope of this technical task, the main object of the invention is to make available a lighter for gas torches capable of maximising the flow lighting reliability.

It is a further object of the invention to allow use of the lighter both in the presence of single-hole torches characterised by an outflow of the mixture taking place from a single hole located centrally on the torch tip, and in the presence of multi-hole torches, i.e. characterised by delivery of high gas flows coming out of a plurality of holes disposed on a circular crown the diameter of which is proportional to the torch power.

Another object of the invention is to enable not only lighting of pre-adjusted torches to be carried out, i.e. torches with the combustible and comburant valves that are open in an optimal position, but also lighting of torches needing to be adjusted (i.e. with the combustible and comburant valves that are closed), so as to enable the size of the potential outlet market for the product to be extended.

In addition, it is an important object of the invention to make available a lighter for gas torches having long duration in time and requiring reduced maintenance.

In particular, it is an objective of the invention to make available a lighter for gas torches carrying out an efficient protection of the electrodes against exposure to the flames or at all events increasing the working life of said electrodes, as well as of the torch nozzle against wear due to contact.

A further objective of the invention is to make available a lighter for gas torches requiring a reduced muscular action by the operator using the same.

In addition, a still further object of the invention is to make available a lighter for gas torches offering high reliability in lighting of the gas delivered by the nozzle, and in particular allowing immediate lighting of the gas the first time the lighter is operated.

The foregoing and still further objects and objectives that will become apparent in the following of the present specification are substantially achieved by a lighter for gas torches having the features set out in claim 1 and/or in one or more of the claims depending thereon.

It is a further object of the present invention to provide a device for mechanical machining operations, in particular welding and/or thermal cutting of metals, in accordance with claim 13 and/or one or more of the claims depending thereon.

A preferred but not exclusive embodiment of a lighter for gas torches and of a device for mechanical machining operations, in particular welding and/or thermal cutting of metals, is now illustrated by way of non-limiting example, with the aid of the accompanying drawings, in which:
- Fig. 1 is a section view of a device for mechanical machining operations comprising a lighter for gas torches in accordance with the invention in a rest position;
- Fig. 2 is a section view of the device seen in Fig. 1 in an operating position;
- Fig. 3 is a section view, along line III-III in Fig. 4, of a first portion of the lighter in accordance with the invention with some parts removed for a better view of others;
- Fig. 4 is a section view, along line IV-IV in Fig. 3, of the portion seen in Fig. 3 with some parts removed for a better view of others;
- Fig. 5 is an enlarged view in section of a portion of the lighter seen in Fig. 1;
- Fig. 6 is a section view to a further enlarged scale of the portion seen in Fig. 5;
- Fig. 7 is a side view further enlarged of a portion of the device seen in Fig. 1;
- Fig. 8 is a view of a first component of the portion seen in Fig. 7;
- Fig. 9 is a view of a second component of the portion seen in Fig. 7;
- Fig. 10 is a diagrammatic view of a portion of the lighter shown in Fig. 1;
- Fig. 11 is a section view of part of the device shown in Fig. 1 in accordance with an alternative embodiment;
- Fig. 12 is a plan view of the device shown in Fig. 11;
- Fig. 13 is a section view of a further embodiment of a lighter for gas torches in accordance with the invention in a rest position;
- Figs. 14a and 14b show a sectional view of the lighter seen in Fig. 13 with some parts removed for a better view of others;
- Figs. 15a and 15b are a front view and side view respectively of the support element 5 in a possible alternative embodiment thereof, to be applied to the lighter seen in Figs. 1, 2 and 13;
- Figs. 16a-16d show a plurality of relative configurations of the converging body of the first electrode.

With reference to the accompanying drawings, a device for mechanical machining operations and in particular welding and/or thermal cutting of metals, has been generally denoted by reference numeral 1.

Device 1 comprises a welding torch provided with a nozzle 2 delivering an inflammable gas flow, and a lighter 3 in accordance with the present invention intended for ignition of the inflammable gas delivered by nozzle 2. Nozzle 2 is part of a gas torch not shown as known by itself, and nozzle 2 is connected, also in known manner, to a tank holding said inflammable gas (not shown).

The technical features of lighter 3 are hereinafter described in detail.

Lighter 3 comprises a base 4 and a support element 5 hinged on base 4 for rotating about a rotation axis "X" that is preferably disposed in the vicinity of a lower support surface of base 4.

The support element 5 substantially extends vertically away from the rotation axis "X" and comprises a rigid bearing structure 6 connected to base 4 by means of a hinge 7 defining said rotation axis "X". The bearing structure 6 is preferably at least partly made of a metal material and at the upper part thereof has a receiving portion 8 to be engaged in a support relationship by the nozzle 2 of a welding torch.

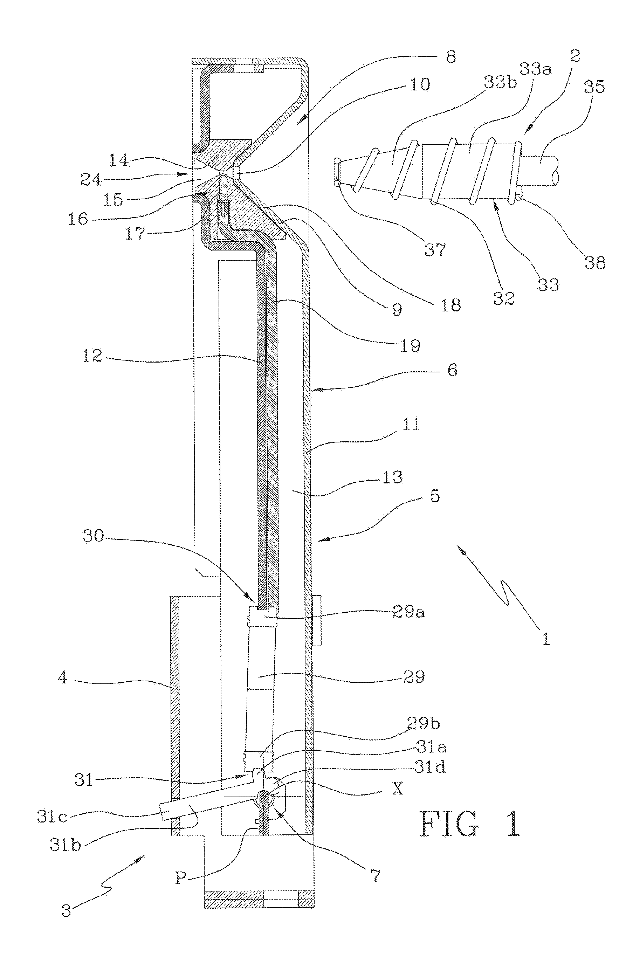

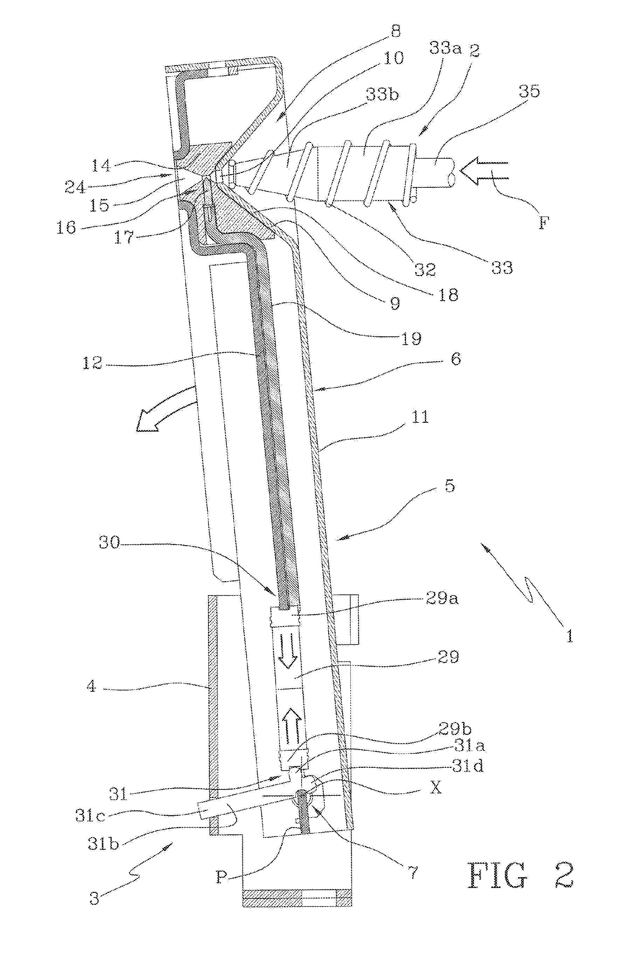

In more detail, the receiving portion has a converging body 9 embedded into the external overall dimensions of the bearing structure 6 and representing the lead-in portion for nozzle 2. The converging body 9 is at least partly made of an electrically conductive material, preferably the same material of which the bearing structure 6 is made; in the embodiment shown in Figs. 1 and 2, body 9 is defined by a converging surface obtained integrally with the bearing structure 6, in particular using the same sheet metal that is bent or spun so as to define said converging surface. The converging surface that has a frustoconical or cap-shaped conformation for example, has a through hole 10 in a substantially centred position.

In a possible alternative embodiment the converging body 9 can be defined by said frustoconical cap-shaped conformation forming a continuous surface that is however defined by an element at least partly made of a conductive material separated and separable from the bearing structure 6.

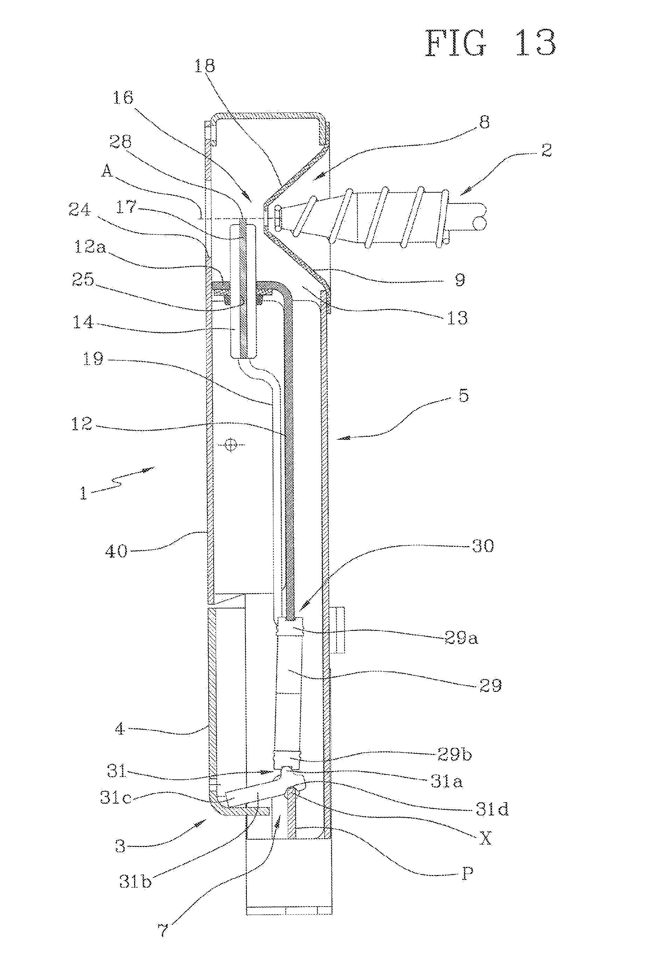

In this connection Fig. 13 shows this alternative embodiment in which the converging body 9 is structurally separated from the bearing structure and can be united to the latter by suitable (and known) constraint systems.

In a preferred embodiment this union takes place through removable connecting means such as screws to allow removal and replacement of this converging body 9.

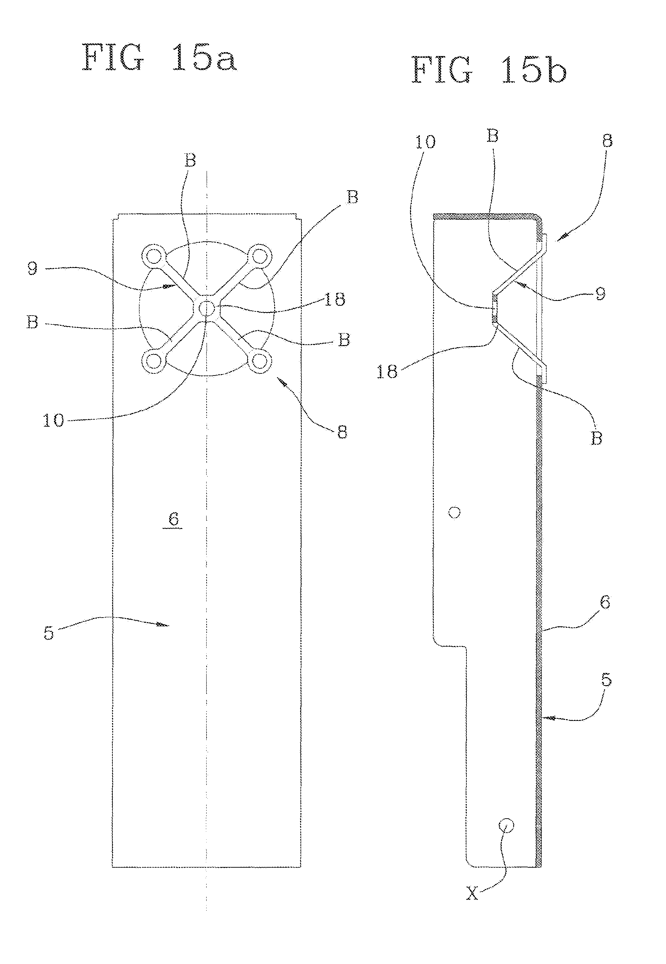

As an alternative to said continuous converging surface, also adoption of another type of converging body 9 may be provided, which body consists of a plurality of arms B converging in the direction of a central region of the opening present in the bearing structure 6 where said through hole 10 is defined. Figs. 15a and 15b show this further alternative embodiment.

In the specific form, four arms spaced apart the same distance from each other are highlighted; they are connected to the bearing structure 6 in a removable manner by means of screws so that replacement of this converging body shown in Fig. 15 with the converging body having a continuous surface shown in Fig. 13 can take place in a very simple and quick manner

In fact it should be noted that in particular applications in which the gas flow of the torch is particularly high, the presence of hole 10 alone is not generally sufficient to allow full passage of the mixture that therefore could stagnate at the receiving portion 8 giving origin even to potential detonations.

In these particular applications the embodiment of the converging body 9 shown in Fig. 15a is very advantageous as it defines a much bigger opening for receiving the gases as compared with the through hole 10 alone.

In fact, the whole free area defined between arms B of body 9 allows passage of further mixture and avoids the above mentioned detonation phenomenon. In accordance with the embodiments illustrated in the figures, the bearing structure 6 comprises a front portion 11 conveniently shaped for receiving or defining (depending on the selected embodiment) said converging body 9, and a rear portion 12 for defining a holding casing, the two portions being steadily coupled to each other. Said two portions 11, 12 internally define a space 13 extending along a vertical extension of the support structure 3.

In the embodiments shown in Figs. 1-12, the receiving portion 8 comprises an insulating body 14 made of an electrically and preferably also thermally, insulating material which is disposed in said space 13 between the front portion 11 and rear portion 12.

This insulating body 14 can be made, by way of example, of a ceramic material. The insulating body 14 internally has a through duct 15 and is disposed in said space 13 in such a manner that duct 15 is disposed in alignment with hole 10 of the converging surface, so that hole 10 and duct 15 define a single through opening.

Housed within space 13 is means 16 for lighting an inflammable gas mixture. This lighting means 16 is operatively active on duct 15 to create an electric arc. AE in at least one length of duct 15.

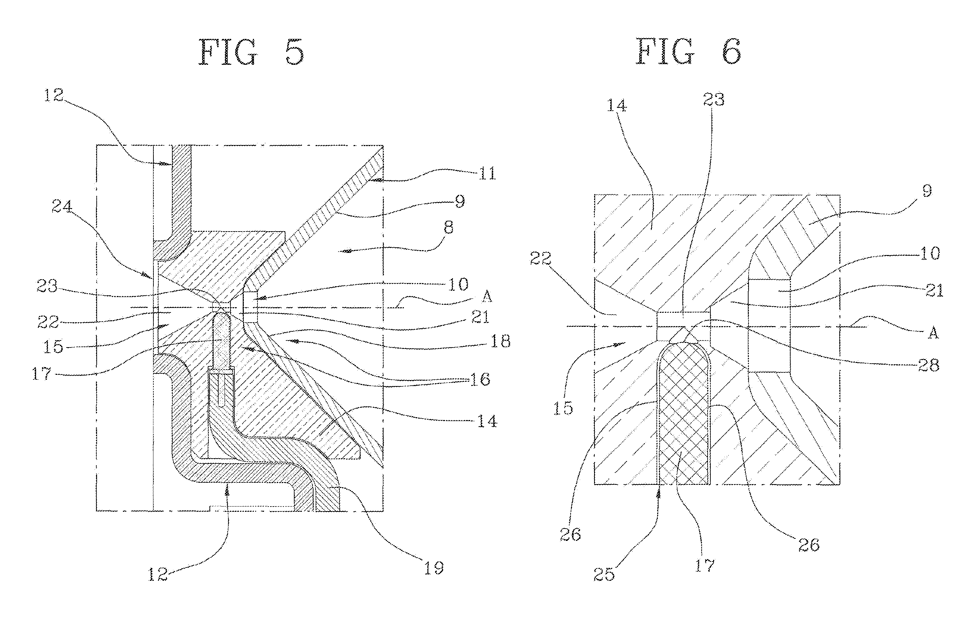

Advantageously, the lighting means 16 comprises a first electrode 17 positioned close to duct 15, and a second electrode 18 defined by said converging body 9. Since duct 15 is directed away from hole 10 of the converging body 9, at least part of duct 15, in particular the part included between the first electrode 17 and the converging body 9, is concerned with the electric arc AE created between the two electrodes 17, 18. Shown in detail in Figs. 5 and 6 is the arrangement of said two electrodes 17, 18 relative to duct 15 and the insulating body 14 in the first embodiment.

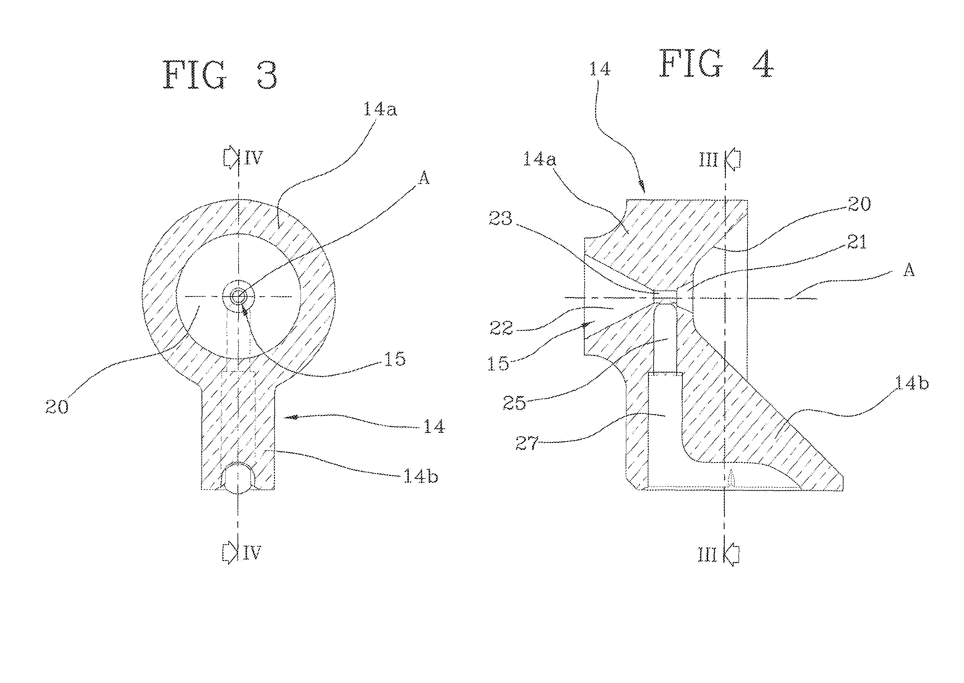

On the contrary, Figs. 3 and 4 detail the conformation of the insulating body 14 alone. In accordance with these figures, the insulating body 14 has an upper portion 14a extending around the longitudinal axis "A" of duct 15 and/or of the converging body 9, and a lower portion 14b defining a support seat for an electric cable 19 feeding the first electrode 17. The upper portion 14a has a substantially axially symmetric shape relative to the longitudinal axis "A" of duct 15, while the lower portion 14b mainly extends along said longitudinal axis "A".

The upper portion 14a of the insulating body 14 has a front surface 20 such shaped that it abuts against the front portion 11 of the bearing structure 6, and in more detail against the portion thereof defining the converging surface (on the side of said portion facing space 13).

Opening on the front surface 20, at a substantially centred position, is the mouth of duct 15 that can therefore be in alignment with hole 10 of the converging surface.

Advantageously, duct 15 could have a converging-diverging conformation being provided with a converging length 21, a diverging length 22 and a narrow section 23 interposed between the two converging 21 and diverging 22 lengths. The narrow section 23 is of constant cross-section, although it could also have a slightly diverging conformation, at all events in a smaller extent than said diverging length 22.

The converging length 21 faces the converging body 9 while the diverging length 22 faces an outlet hole 24 formed in the rear portion 12 of the bearing structure 6.

The insulating body 14 has a seat 25 made close to, and communicating with the narrow section 23 and inside which the first electrode 17 is steadily housed. Seat 25 is oriented in a radial direction relative to the longitudinal axis "A" of duct 15.

Advantageously, between the first electrode 17 and seat 25 at least one gap 26 is delimited which extends radially relative to the longitudinal axis "A" of duct 15 and communicates with the narrow section 23 for reasons to be clarified in the following.

Seat 25 extends away from the narrow section 23 towards the lower portion 14a of the insulating body 14, meeting a groove 27 that defines a guide for said electric cable 19 feeding the first electrode 17 (visible in Figs. 1, 2 and 5).

The first electrode 17 has an active portion 28 from which striking of the electric arc occurs, which is disposed radially relative to the longitudinal axis "A" of duct 15 to direct the electric arc towards duct 15. The active portion 28 of the first electrode 17 has a rounded and preferably hemispherical conformation, as shown in Fig. 6.

Advantageously, in addition, the active portion 28 is fully included within the overall dimensions of the insulating body 14, which means that the active portion 28 is fully contained within said seat 25 and does not come out of seat 25 towards duct 15. In this way, the active portion 28 of the first electrode 17 is protected against the flame and the hot gas flow passing through duct 15.

The preferred embodiment of the invention is shown in Fig. 13.

According to this embodiment it is provided that the front portion 11 and rear portion 12 of the bearing structure be defined by two separated elements (Figs. 15a and 15b show the front portion 11 alone, the rear portion 12 being removed).

The rear portion 12 has an end region 12a folded up and pierced with a hole so as to enable passage of electrode 17 carried by said insulating body in turn connected to region 12a.

The electric connecting cable 19 starting from the piezoelectric element 29 is connected to a lower region of the first electrode 17 which continuously crosses the insulating body 14 protecting it.

Also provided is a closing element 40 (sheet metal) adapted to define the rear surface of the support element 5. The latter has an outlet hole 24 aligned with the through hole 10 and the first electrode 17 along the longitudinal axis "A" of the converging body 9.

It should be noted that the support element 5 (comprising said bearing structure 6, converging body 9 and closing sheet metal 40) is rigidly set in rotation relative to base 4 around axis "X".

In all embodiments the support element 5 carries the first electrode 17 and second electrode 18 rigidly connected thereto in such a manner that the relative position of the converging body 9, hole 10, first electrode 17 and hole 24 is always aligned along the longitudinal axis "A" in such a manner that the gas flow is always directed in an optimal manner with respect to striking of the electric arc AE.

At this point it should be noted that the specific geometric configuration of the first electrode 17 can be different from that of the second electrode 18, as well as its relative position.

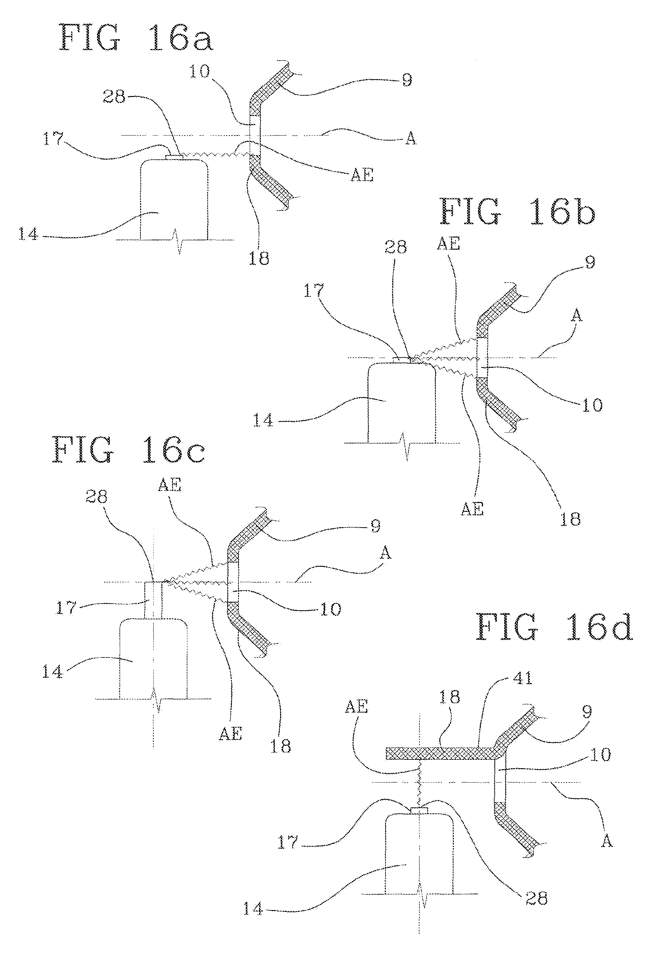

In this connection, in addition to the configurations shown in Figs. 1, 13 and 14a it will be possible to adopt one or more of the configurations shown in Figs. 16a-16d.

In particular, the configuration seen in Fig. 16a shows the active portion 28 of electrode 17 in a lower position relative to the longitudinal axis "A", so as to be fully protected by the insulating body 14.

The spark is concealed and jumps always and exclusively towards the lower point (less distance) of the second electrode 18.

In the configuration shown in Fig. 16b the spark is centred and jumps in a substantially random manner at any point of the perimeter of the through hole 10.

In this case too, the electrode 17 is substantially protected by the insulating body 14.

The configuration shown in Fig. 16c shows electrode 17 jutting out relative to the insulating body 14, in order not to occlude the free region for gas passage.

The spark is centred and jumps as in the case in Fig. 16b, but electrode 17 is less protected than in the preceding solutions.

Finally, the operating configuration shown in Fig. 16d allows electrode 17 to be protected by means of the insulating body 14 and the spark is always centred relative to the gas flow moving forward along the longitudinal axis "A". In fact, due to the presence of a portion 41 (defining the second electrode 18) jutting out along said direction "A" of the converging body 9 towards electrode 17, the electric arc always crosses the longitudinal axis "A" in a transverse direction.

Irrespective of the configurations shown, also adoption of different configurations than those herein shown obviously falls within the protection scope of the present invention.

In accordance with views in Figs. 1, 2 and 13, lighter 3 further comprises a piezoelectric element 29 operatively interposed between base 4 and the support element 5 so as to generate an electric potential difference following setting in rotation of the support element 5 relative to base 4. This electric potential difference is transferred to the two electrodes 17, 18 by said electric cable 19 leading to the first electrode 17, and a further electric connection consisting of the direct contact of the two terminations 29a and 29b of the piezoelectric generator 29 with the static cam 31a and the related rear portion of the bearing structure 12 (which is the mass), i.e. with the pressure 30 and fulcrum 31 points which are in direct (mechanical and electrical) contact with the front portion and therefore with the receiving portion 8 leading to the second electrode 18.

The piezoelectric element 29 is submitted to a compression action resulting from rotation of the support element 5 about the rotation axis "X". In particular, the piezoelectric element 29 has a first upper end 29a stably in engagement with the bearing structure 6 at a pressure point 30, and a second lower end 29b, opposite to the first one, rotatably in engagement with base 4 at a fixed fulcrum point 31.

In accordance with the figures, the fulcrum point 31 is defined by a protrusion 31a of a static cam 31b on which said second end 29b of the piezoelectric lighter 29 rests. In more detail, the static cam 31b rests, on one side 31c, on a fixed portion of base 4 and, on a second side 31d opposite to the first side 31a, on a movable portion "P" and in particular a portion of the support element 5. The second side 31d therefore rests on said movable portion "P" which too rotates about the rotation axis "X" following rotation of the support element 5 about the same rotation axis "X", while the first side 31c stably rests close to a window made rearwardly relative to base 4. Protrusion 31a faces upwards and is made close to said second side 31d of the static cam 31b.

Advantageously, adoption of said static cam 31b allows all the concerned high forces, referring in particular to the compression force to which the piezoelectric element 29 is submitted, to be managed as inner actions of a single structural element, in this case the support element 5 hinged around the rotation axis "X".

Preferably, the upper end 29a of the piezoelectric element 29 is steadily in engagement with the rear portion 12 of the bearing structure 6. Advantageously, the receiving portion 8 (onto which the thrust force is applied through the torch) and the rotation axis "X" are disposed on opposite sides relative to the pressure point 30. The pressure point 30 in fact is the point to which the piezoelectric element 29 applies a resisting force counteracting the thrust force "F" exerted by the torch on the receiving portion 8, and in the above described configuration (shown in Figs. 1, 2 and 13) the resisting force applied by the piezoelectric element 29 has a lever arm much lower that the lever arm of the thrust force "F" exerted by the torch on the receiving portion 8.

Preferably, the upper end 29a of the piezoelectric element 29 is steadily in engagement with the rear portion 12 of the bearing structure 6. Advantageously, the receiving portion 8 (to which the thrust action is applied through the torch) and the rotation axis "X" are disposed on opposite sides relative to the pressure point 30. In fact, the pressure point 30 is the point to which the piezoelectric element 29 applies a resisting force counteracting the thrust force "F" exerted by the torch on the receiving portion 8, and in the above described configuration (shown in Figs. 1 and 2) the resisting force applied by the piezoelectric element 29 has a lever arm much smaller than the lever arm of the thrust force "F" exerted by the torch on the receiving portion 8.

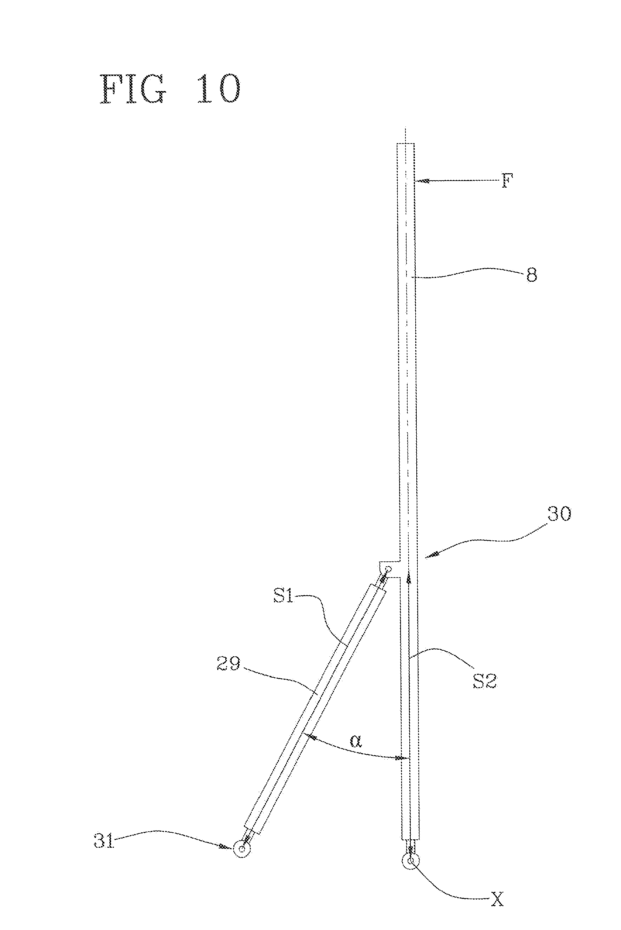

Advantageously, in addition, segment "S1" joining the pressure point 30 to the fulcrum point 31, and segment "S2" joining the pressure point to the rotation axis "X" form an angle α between them the value of which varies during operating rotation of the support element 5, between 0 and 10 degrees and preferably between 0 and 6 degrees. Fig. 10 shows location of said angle α. It should be noted that Fig. 10 only aims at highlighting positioning of angle α, and the mutual position of said fulcrum 31 and pressure 30 points and of the application point of force "F", but is of no importance as regards determination of the true proportions of lighter 1. In addition, Fig. 10 has no importance for determining the kinematic operation of lighter 1 in detail, which kinematic operation however can be evaluated with reference to the detailed views in Figs. 1 and 2 in which the shape and operation of the static cam 31b are shown.

The greater lever arm, measured with respect to the fulcrum point 31, of the thrust force "F" of the torch relative to the reaction of the piezoelectric element 29 at the pressure point 30 allows a thrust multiplication, from the torch to the piezoelectric element, equal to about three hundred times when angle α has a width of 6 degrees.

The greater lever arm of the thrust force "F" of the torch relative to the reaction of the piezoelectric element 29 at the pressure point 30 allows a thrust multiplication at the pressure point 30 equal to about twenty-eight times, while the leverage shown in Fig. 10 allows, starting from the reaction applied to the pressure point 30, a compression action on the piezoelectric element 29 about eleven times greater than the thrust force "F" exerted by the torch on the receiving portion 8. From co-operation of the two mentioned multiplication effects, an overall multiplication of about three hundred times results between the thrust force "F" exerted by the torch on the receiving portion 8 and the compression action on the piezoelectric element 29.

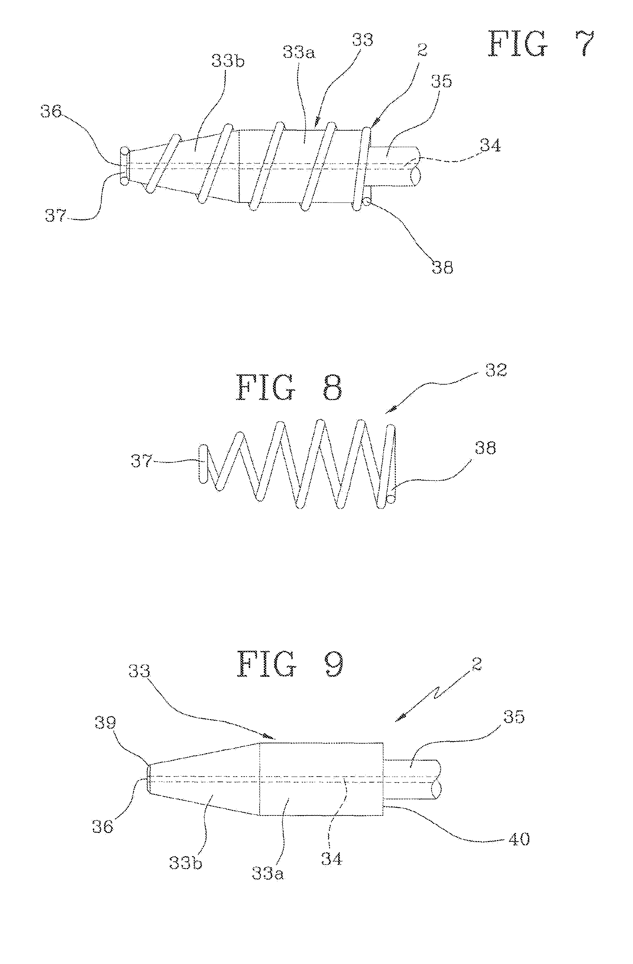

Fig. 7 shows nozzle 2 coupled to a coating element 32 for manufacture of a device 1 for mechanical machining operations, in particular welding and/or thermal cutting of metals, in accordance with the present invention.

Nozzle 2, of a type known by itself and shown in Fig. 9, comprises a body 33 having a rear cylindrical portion 33a, and a front frustoconical (or more generally tapering) portion 33b mutually connected and preferably made integral with each other.

Body 33 internally has a through channel 34 opening at the front through an orifice 35 and connected at the rear to a pipe 35 leading to a tank for an inflammable gas mixture.

The coating element 32, shown in detail in Fig. 8, comprises a helical spring having a plurality of turns and an outer shape substantially matching the shape of body 33 so that it can be fitted on body 33 and can encompass it uniformly on the outer surface thereof.

The helical spring has an undeformed size, measured parallel to channel 34, smaller than the size of body 33 and is elastically deformable to encompass the whole longitudinal extension of body 33 when fitted thereon. In addition, deformability of the helical spring allows it to fit nozzles having different sizes without any problem.

In more detail, the helical spring has a front ring 37 to be engaged in abutment relationship with a front surface 39 of nozzle 2 and a rear ring 38 to be engaged in abutment relationship with a rear surface 40 of nozzle 2. More particularly, the rear ring 38 of the helical spring is deformable in a radial direction for snap-fitting on said rear surface 40 of nozzle 2 during mounting of the helical spring on nozzle 2.

The front ring 38 of the helical spring is adapted to directly come into contact with the converging surface 9 of lighter 3 to prevent contact between nozzle 2 and the converging surface 9.

Advantageously, the helical spring is further removably mounted on nozzle 2 so that it can be replaced when worn out too much.

Operation of device 1 is now described in detail.

An operator manually grips the torch, on nozzle 2 of which the above described helical spring is possibly fitted, and moves nozzle 2 close to the receiving portion 8 of lighter 3. Lighter 3 is initially in the rest configuration shown in Fig. 1 or 13.

Nozzle 2 supplying the inflammable gas mixture is pushed against the converging body 9 until the front ring 38 of the helical spring comes into contact with a point whatever of the converging surface, preferably a point thereof close to the through hole 10.

A further thrust on the torch is transmitted to the receiving portion 8 and causes a rotation of the support element 5 against the resisting action of the piezoelectric element 29 that is compressed and generates a potential difference that is transmitted to electrodes 17, 18. The progressive character of the thrust action of the torch on the receiving portion 8 results in generation of a succession of electric arcs AE from the first electrode 17 (referred to in this particular sector as "high-voltage electrode") to the second electrode 18, consisting of the converging body 9.

The arrows in Fig. 2 denote the thrust action on the torch and therefore on nozzle 2; the consequent rotation action imparted to the support element 5; the compression of the piezoelectric element 29.

The delivered gas flow from orifice 36 of the nozzle flows through the through hole 10 and therefrom to the inside of duct 15 to be then again discharged to the outside through the outlet hole 24. The electric arcs AE created between the two electrodes 17, 18 pass through part of duct 15, and in particular at least the converging length of duct 15 (Figs. 1-2) or the free area between the electrodes of Fig. 13, in the opposite direction relative to the gas flow. In fact, the electric arcs strike from the active position 28 of the first electrode 17 and are directed towards the converging body 9 and, along their path, make an efficient lighting action of the gas delivered by nozzle 2 resulting in flame generation.

The flame propagate within duct 15 or in the free area but it does not reach the active portion 28 of the first electrode 17 because this active portion 28 is fully contained, and therefore protected, within seat 25 formed in the insulating body 14, isolation of which is both thermal and electrical.

In addition, with reference to Figs. 1 and 2, the gas flow through the narrow section 23 generates a vacuum in said narrow section 23 due to the Venturi effect, and this vacuum calls back a flow of fresh air (from the outside through gaps 26) that will cool the first electrode 17.

During this step, also the electric cable 19 feeding the first electrode 17 is protected from the flame, being housed inside groove 27 made in the lower portion of the insulating body 14.

Possible residual matter or particles produced by generation of the electric arcs do not tend to lay on the first electrode 17 but on the contrary are removed by the air flow running through gaps 26 and at all events sucked by the vacuum present in the narrow section 23. This residual matter is subsequently laid on the diverging length 22 of duct 15 or is possibly evacuated to the outside through the outlet hole 24 (Figs. 1 and 2).

Advantageously, gradual release of the thrust of the torch on the receiving portion 8 causes a progressive return of the support element 5 and a progressive recovery of the deformation by the piezoelectric element 29, that will produce a further succession of electric arcs useful for igniting the gas mixture if, for any reason, ignition of same did not take place before.

During the whole igniting or lighting procedure, there is no direct contact causing wear between nozzle 2 and the converging surface 9.

The present invention achieves the intended purposes, overcoming the drawbacks present in the known art.

The geometry of the leverage transmitting the thrust force from the torch to the piezoelectric element allows a very high multiplication ratio, with clear reduction in the operator's effort. In addition, the progressive action in compressing the piezoelectric element allows generation of a plurality of electric arcs between the electrodes both during a forward rotation of the support element and during a reverse rotation of same and this increases efficiency of the igniting action of the inflammable mixture.

Under this circumstance, ignition of the inflammable mixture always takes place the first time the lighter is activated.

In addition, the converging-diverging conformation of the duct having a narrow intermediate portion, gives rise to a vacuum effect drawing air from the outside through the gaps surrounding the first electrode, which will simultaneously cause cooling of the first electrode and removal of deposits from the region of interest of the electrode itself.

In addition, accomplishment of the second electrode in the form of the converging surface first of all enables the electric arc to extend longitudinally of the duct and in a direction opposite to the gas flow direction (retrograde spark), promoting ignition of the mixture. Furthermore, being the converging surface substantially axially symmetric and very extended, it defines an electrode of an almost unlimited duration, replacement of which is not required. Due to the axially symmetric conformation of the converging surface, in fact, a wide surface is available on which the electric arc can be discharged, thus reducing wear of the second electrode.

The conformation of the insulating body allows an efficient protection of the first electrode against the direct flame emitted when the inflammable mixture is ignited and in addition thermal insulation from the heat emitted by the flame itself. This protection is also extended to the electric feeding cable of the first electrode.

As regards the coating element for the nozzle, it prevents direct contact between nozzle and converging surface and therefore eliminates wear due to contact, which would impair the nozzle. On the one hand, therefore, the nozzle has a useful life much longer and the orifice of the inflammable mixture does not tend to deteriorate easily and, on the other hand, the coating element can be expressly made of steel very resistant to wear and at all events it can be removed from the nozzle and therefore replaced. The coating element that therefore can be replaced cheaply can also fit nozzles having different sizes due to its deformability, and in addition it can be easily mounted to the nozzle.

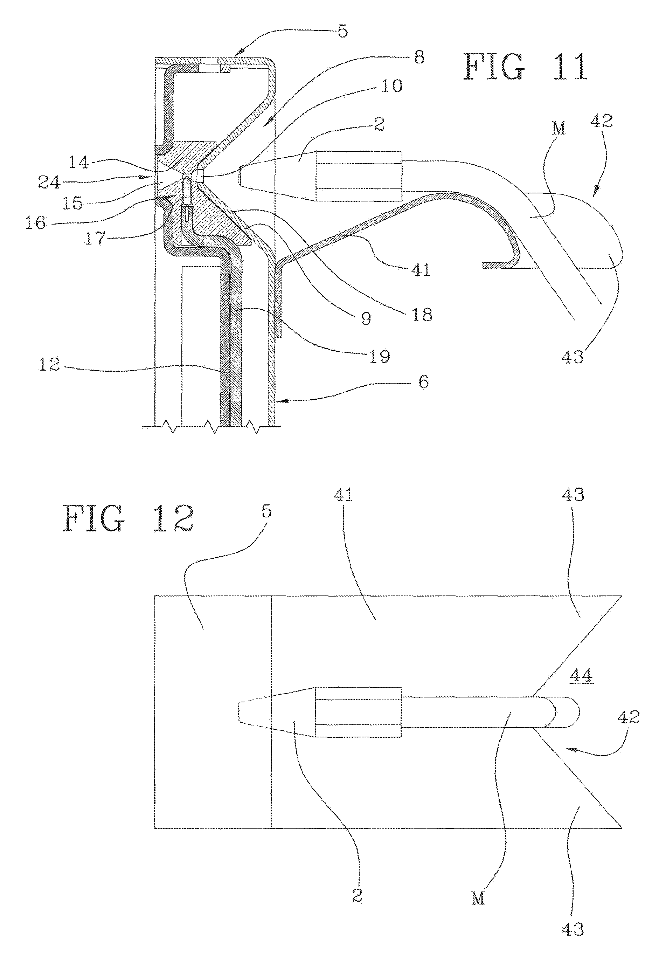

A further alternative embodiment of lighter 1 in accordance with the invention is shown in Fig. 11. In accordance with this embodiment, lighter 1 comprises a front protrusion 41, steadily connected to the support element 5 and suitable for engagement in a support relationship by a support portion, or handle "M", of the torch for receiving such a thrust that the support element 5 is driven in rotation around the rotation axis "X". This front protrusion 41 therefore defining a spacer, has a lead-in portion 42 that is preferably curved and designed to receive said handle "M" of the torch with contact. The lead-in portion 42 has a conformation substantially matching the shape of the handle "M" portion to be received by it, and in particular the shape of a curved portion of handle "M".

In accordance with the plan view in Fig. 12, the lead-in portion 42 has two lateral protuberances 43 delimiting a seat 44 between them for housing said handle "M" portion to be received. Preferably, the size of said front protrusion 41 is adapted to avoid contact between nozzle 2 and the receiving portion 8 when the torch handle "M" rests on said front protrusion 41. Advantageously, this allows a thrust to be exerted on the support element 5 directly with the torch handle "M" and therefore without a direct contact between nozzle 2 and receiving portion 8 being required, and without mounting of the coating element 32 being necessary. Under some work conditions, in fact, the operating use of the torch can be hindered by the increase in bulkiness of nozzle 2 due to mounting of the coating element 32 and this can take place when accessibility to very narrow gaps is required to be ensured to the torch. Due to said pair of protuberances 43, on the other hand, approaching and resting of handle "M" on the lead-in portion 42 is facilitated.

The present invention achieves the intended purposes and overcomes the drawbacks present in the known art.

The geometry of the leverage transmitting the thrust action from the torch to the piezoelectric element allows a very high multiplication ratio to be reached, which will clearly reduce the operator's effort. In addition, the compression progressive character of the piezoelectric element allows generation of a plurality of electric arcs between the electrodes both during a forward rotation of the support element and during a return rotation of same and this increases efficiency of the action for igniting the inflammable mixture.

Under this circumstance, ignition of the inflammable mixture always takes place the first time the lighter is activated.

In addition, the converging-diverging conformation of the duct of the first embodiment having a narrow intermediate portion, gives rise to a vacuum effect drawing air from the outside through the gaps surrounding the first electrode, which will simultaneously cause cooling of the first electrode and removal of deposits from the region of interest of the electrode itself.

In addition, accomplishment of the second electrode in the form of the converging body first of all enables the electric arc to extend longitudinally of the duct and in a direction opposite to the gas flow direction (retrograde spark), promoting ignition of the mixture. Furthermore, being the converging surface substantially axially symmetric and very extended, it defines an electrode of an almost unlimited duration, replacement of which is not required. Due to the axially symmetric conformation of the converging surface, in fact, a wide surface is available on which the electric arc can be discharged, thus reducing wear of the second electrode.

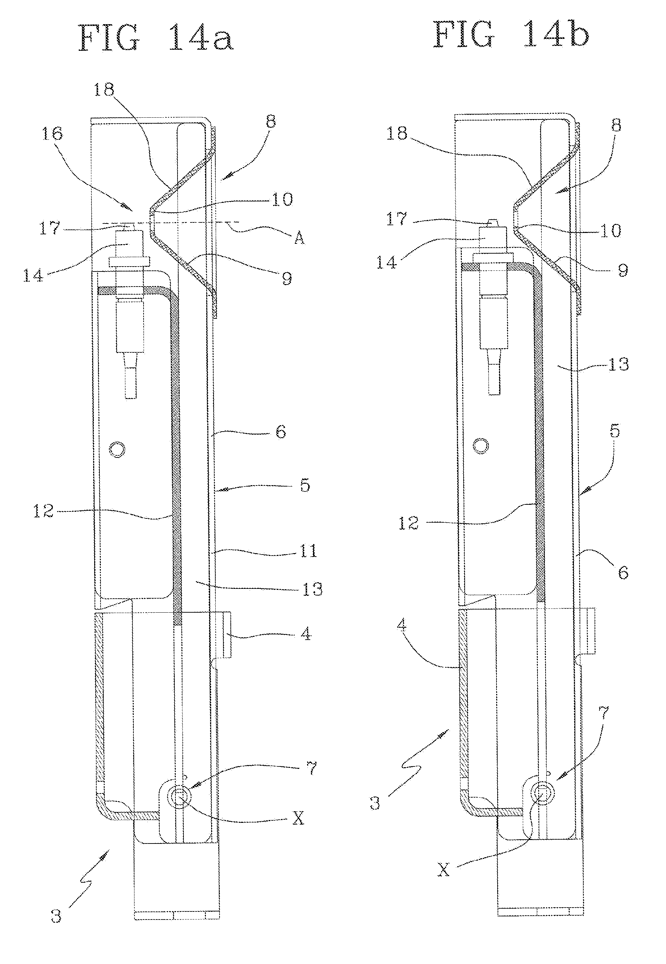

Adoption of a converging body in the form of a substantially open grid allows detonation problems to be avoided irrespective of the gas flow and in addition the removable connection of the body allows passage from the lighter configuration shown in Fig. 13 to that shown in Fig. 14b with few and simple operations.

The conformation of the conical body performs the function of centring and aligning the torch tip (i.e. the gas flow) with the spark-forming channel; the system is advantageous also in the presence of torches with many holes provided for delivery of high gas flows coming from a plurality of holes disposed on a circular crown, and also for working with torches having different geometries, from a frustoconical pointed profile to a possible cylindrical profile with a diameter of the base (on which the holes are formed) varying from about 10 mm to about 20 mm, as a function of power.

Replacement of the continuous cone-shaped conveyor with the cone-shaped grid conveyor with N arms spaced apart (not necessarily more spaced apart) maintains the special quality of centring and aligning the torch axis with the spark-forming point, maintains the optimal striking features without obstacles being present for the gas flow adjustment, and solves the above mentioned detonation problem.

The conformation of the insulating body allows an efficient protection of the first electrode against the direct flame emitted when the inflammable mixture is ignited and in addition thermal insulation from the heat emitted by the flame itself. This protection is also extended to the electric feeding cable of the first electrode.

As regards the coating element for the nozzle, it prevents direct contact between nozzle and converging surface and therefore eliminates wear due to contact, which would impair the nozzle. On the one hand, therefore, the nozzle has a useful life much longer and the orifice of the inflammable mixture does not tend to deteriorate easily and, on the other hand, the coating element can be expressly made of steel very resistant to wear and at all events it can be removed from the nozzle and therefore replaced. The coating element that therefore can be replaced cheaply can also fit nozzles having different sizes due to its deformability, and in addition it can be easily mounted to the nozzle.

Practical tests carried out on the prototype of the device have allowed the following to be highlighted: that the same can be used not only for lighting again a gas torch previously already adjusted, but also for initial lighting of the torch with subsequent adjustment of the amount of combustible and comburent. It has been noticed that the device firstly developed for use in place of the pilot flame on fixed welding stations provided with an economiser (i.e. of a device allowing the previously adjusted torches to be lit again, i.e. with the combustible and comburent valves open in an optimal position - the economiser function is to intercept the two flows upstream of the valves for adjusting the flow rate when the torch is laid down by the operator) has then proved itself also suitable for lighting torches to be adjusted.

The quality of the spark and the striking conditions in fact allow lighting of torches with the combustible and comburant valves closed, which situation is typical of fixed and movable stations that are not provided with an economiser, in such a manner that the size of the potential outlet market for the product can be extended.

The above proves the operating reliability and versatility of the device.

## Claims

1. A lighter for gas torches, comprising:
- a base (4);
- a support element (5) connected to the base (4) and rotatably movable relative to the base (4) around a rotation axis (X);
- lighting means (16) for generated an electric arc comprising at least one first electrode (17);
- a receiving portion (8), adapted to receive an inflammable gas flow from a nozzle (2) of a gas torch and having a hole (10) to enable passage of said gas flow towards said first electrode (17), said receiving portion (8) having a converging configuration on moving close to said first electrode (17), said nozzle (2) being susceptible of engagement in a support relationship on said receiving portion (8) on the side opposite to said first electrode (17);
**characterised in that** said receiving portion (8) is at least partly made of an electrically conductive material and defines a second electrode (18) cooperating with said first electrode (17) for generating an electric arc capable of carrying out ignition of said gas.

2. A lighter as claimed in claim 1, **characterised in that** said receiving portion (8) comprises a converging body (9) at least partly made of an electrically conductive material, said first electrode (17) being positioned downstream of said converging body (9) relative to a crossing direction of the gas through the hole (10) in such a manner as to generate an electric arc passing through at least one length of gas volume, preferably said electric arc being oriented in the opposite direction relative to said advancing direction of the gas.

3. A lighter as claimed in claim 1 or 2, **characterised in that** said converging body (9) has said hole (10) for gas passage close to its smaller section, said body (9) defining a substantially axially symmetric conformation, preferably cap-shaped or frustoconical, said converging body (9) for example having a continuous converging surface or being provided with a plurality of arms (B) converging towards said hole (10).

4. A lighter as claimed in one or more of the preceding claims, **characterised in that** said first electrode (17) has an active portion (28) from which the electric arc is generated, said first electrode (17) being oriented in a direction substantially radial to the longitudinal extension axis (A) of said converging body, preferably the first and second electrodes (17, 18) being movable with the support element (5) in such a manner that their relative arrangement is maintained fixed.

5. A lighter as claimed in anyone of the preceding claims, **characterised in that** it further comprises an insulating body (14) made of an at least thermally and/or electrically insulating material having a seat (25) intended for housing the first electrode (17), said active portion (28) of the first electrode (17) being fully contained in said seat (25) or partly protruding therefrom in the direction of the gas flow.

6. A lighter as claimed in one or more of the preceding claims, **characterised in that** it comprises a base (4), a support element (5) connected to the base (4) and rotatably movable relative to the base (4) around a rotation axis (X), and a piezoelectric element (29) operatively interposed between the support element (5) and the base (4) for transmitting an electric potential difference to said electrodes (17, 18), following an operating rotation movement of the support element (5) relative to the base (4).

7. A lighter for gas torches as claimed in anyone of the preceding claims, comprising:
- at least one piezoelectric element (29), operatively interposed between the support element (5) and the base (4) for activating said lighting means (16) as a function of a rotation movement of the support element (5) relative to the base (4);
said support element (5) having a receiving portion (8) adapted to receive an inflammable gas flow from a nozzle (2) of a gas torch and to convey said gas flow towards said lighting means (16); said receiving portion (8) being also susceptible of engagement in a support relationship by said nozzle (2) for receiving a thrust and being moved around said rotation axis (X);
**characterised in that** said piezoelectric element (29) has a first end (29a) in engagement with the support element (5) at a pressure point (30) and a second end (29b), opposite to the first one (29a), connected to the base (4) at a fulcrum point (31), said receiving portion (8) and said rotation axis (X) being disposed on opposite sides relative to said pressure point (30).

8. A lighter as claimed in anyone of the preceding claims, **characterised in that** said receiving portion (8) and rotation axis (X) are disposed on opposite sides relative to said pressure point (30) in such a manner that the thrust force (F) exerted by the nozzle (2) on the receiving portion (8) has a lever arm relative to the rotation axis (X) greater than the corresponding lever arm of a reaction force exerted by the piezoelectric element (29) on the support element (5) at said pressure point (30).

9. A lighter as claimed in anyone of the preceding claims, **characterised in that** said first end (29a) of the piezoelectric element (29) describes a circular trajectory about said rotation axis (X) during rotation of the support element (5).

10. A lighter as claimed in one or more of the preceding claims, **characterised in that** the segment (S1) joining the pressure point (30) and the fulcrum point (31), and the segment (S2) joining the pressure point (30) and said rotation axis (X) form an angle (α) between them the value of which varies, during an operating rotation of the support element (5), between 0 and 10 degrees and preferably between 0 and 6 degrees.

11. A lighter as claimed in one or more of the preceding claims, **characterised in that** it comprises a static cam (31b) resting, on a first side (31c), on said base (4) and, on a second side (31d) opposite to said first side (31c), on a portion of said support element (5), said fulcrum point (31) being defined by a portion of the static cam (31b).

12. A lighter as claimed in one or more of the preceding claims, **characterised in that** said lighting means (16) comprises a pair of electrodes (17, 18) steadily mounted on the support element (5).

13. A device for mechanical machining operations, in particular for welding or thermal cutting of metals, comprising:
- a torch to be manually handled by an operator and having a nozzle (2) for delivery of an inflammable gas;
- a lighter (3) preferably in accordance with anyone of the preceding claims, for carrying out lighting of the inflammable gas delivered by said nozzle (2), said lighter (3) having a receiving portion (8) susceptible of engagement in a support relationship by said nozzle (2) and being manually activated by the operator by the pressure exerted through the nozzle (2) on said receiving portion (8);
**characterised in that** said torch comprises a coating element (32), preferably associable with the nozzle (2) in a removable manner and adapted to come into contact with said receiving portion (8) during activation of the lighter (3).

14. A device as claimed in the preceding claim, **characterised in that** said coating element (32) is at least elastically deformable so as to fit nozzles (2) having different sizes, said coating element (32) for instance comprising a helical spring having a conformation substantially matching the shape of the nozzle (2) to encompass an outer surface of said nozzle (2), more preferably said helical spring having a front portion (37) to be engaged to a front surface (39) of the nozzle (2) in abutment relationship therewith, and a rear portion (38) to be engaged to a rear surface (40) of the nozzle (2) in abutment relationship therewith, said rear portion (38) of the spring for instance comprising a radially deformable ring to be snap-fitted on said rear surface (40) of the nozzle (2) during mounting of the spring on the nozzle (2).

15. A device for mechanical machining operations, in particular for welding or thermal cutting of metals, comprising:
- a torch to be manually handled by an operator and having a handle (M) to be gripped by an operator and a nozzle (2) fastened to an end of the handle (M) for carrying out delivery of an inflammable gas;
- a lighter (3) preferably as claimed in anyone of the preceding claims, for carrying out lighting of the inflammable gas delivered by a nozzle (2), said lighter (3) having a lead-in portion (42) to be engaged by said handle (M) of the torch in a support relationship and being manually activated by the operator by the pressure exerted through said handle (M) on said lead-in potion (42).
